# EUROPEAN PATENT APPLICATION

(11) **EP 1 839 525 A1**
(43) Date of publication of application: **03.10.2007**
(21) Application number: 07006064.5
(22) Date of filing: 23.03.2007
(51) Int. Cl.: A45D 44/14, G09B 19/00, G09B 25/00

(54) **A mannequin head**

(30) Priority: 28.03.2006 JP 2006087427
(71) Applicant: C.K. Hair International Limited, Hong Kong (HK)
(72) Inventor: Taya, Kazumasa, Shibuya-ku (JP)
(74) Representative: Forrester, Simon Joseph

(57) **Abstract**

A mannequin head for teaching fundamental techniques of hairdressing works, such as out and perm, properly and universally, and hairdressing teaching method using the mannequin head are provided. A mannequin head used for hairdressing training has lines giving guides of various hairdressing works such as haircut, perm and hair coloring drawn on the scalp area (12) thereof. The lines includes lines for segmentalizing the scalp area (12) (such as a median line (51), an ear-to-ear line (52), an upper zone line, a middle zone line and a lower zone line) and a slice line (60) drawn along a border of a panel which is a bundle of hair being a unit of the hair bundled by a hairdresser including a student in a prescribed hairdressing work.

## Description

### Technical Field

The present invention relates to a mannequin head used for training of hairdressing techniques such as haircut, perm and hair coloring and methods for training of the hairdressing techniques by using such mannequin head.

### Background Art

In training of hairdressing techniques such as hair cutting, perm and hair coloring techniques to a student, a mannequin head (a cut wig) on which either human or artificial hair is fixed is used.

In the cutting work, a scalp area of a head is segmented into a number of segments (blocks), the hair in each of the blocks is divided into plural bundles (panel) of the hair and the one panel is picked up with one hand and out by a scissors or a razor with the other hand. The blocks are defined to segmentalize the scalp area of the head in the height, front-back and transverse directions such that the hair will be treated in a balanced manner.

Meanwhile, woman's hairstyle includes various styles such as "one-length", "gradation" and "layer", and a way for defining the panel varies with the styles. For example, in the "one-length" in which the hair is trimmed up with substantially the same level, the hair in the block is transversely divided into the transverse panels. And, in the "layer" in which the hair is trimmed up in such a way that the hair length increases continuously from top to bottom, the hair in the block is vertically divided into the vertical panels.

In barber schools and beauty schools, the instructors demonstrate to students how to segment the scalp area into the blocks and to divide the hair in the block into panels by using the mannequin head. In which case, the student learns the techniques by carefully looking the practice of the instructor, and the instructor gives the student elementary lesson by hand. However, in such trainings, how to segmentalize the scalp area into the blocks and how to divide the hair in the block into the panels may not be constantly transmitted to the student depending on uniqueness of the instructor's technique. And, the student may lose the right way during repeating the practice many times.

So, the improved mannequin head is disclosed in Japanese utility model publication No.S60-155417, in which the scalp area is segmentalized into segments suited for hairdressing works such as hair cut and perm, and the hair is changed in color every segment. Alternatively, another mannequin head is disclosed in Japanese published unexamined No. 2003-164330, in which colored hairs are fixed in the transverse and longitudinal directions with a predetermined width.

Such mannequin heads having colored hair have a problem in complex manufacturing process.

### Disclosure of the Invention

### Problems to be Resolved by the Invention

In order to solve the above problems, an object of the present invention is to provide a mannequin head for teaching fundamental techniques of hairdressing works, such as out and perm, properly and universally, and hairdressing teaching method using the mannequin head.

### Means of Solving The Problems

A mannequin head used for hairdressing training according to the present invention is a mannequin head imitating a human head and having hair fixed on a scalp area thereof, wherein said scalp area has lines giving guides of various hairdressing works such as haircut, perm and hair coloring drawn thereon, and said lines includes a slice line drawn along a border of a panel which is a bundle of hair being a unit of the hair bundled by a hairdresser including a student in a prescribed hairdressing work.

According to the present invention, since the mannequin head has lines giving guides of various hairdressing works drawn on the scalp area thereof, the instructor can show constant standard lines, independent of his uniqueness of hairdressing technique, at demonstration of hairdressing techniques to students using the mannequin head. This facilitates the teaching of the instructor and understanding of student. And, in a case where a student practices hairdressing techniques alone, the student can acquire the techniques by repeating the practice following the lines drawn on the head mannequin. Especially, the slice lines are standard lines giving guides of various hairdressing works such as cut, so visualization of the slice lines and repeat practicing of placing a comb on the visualized slice lines will allow the student to acquire hairdressing techniques, resulting in improvement of his skill.

In addition, the mannequin head according to the present invention can be manufactured easier than that having hair changed in color every segment.

In the mannequin head used for hairdressing training according to the present invention, said lines may include a plurality of slice lines, in which a distance between the adjacent slice lines is equal to a width of said panel.

In this case, a student can understand a standard panel width. In general, the direction of the slice lines and the width between the adjacent slice lines vary with regions on the scalp area of the head and also hairstyles. Accordingly, the mannequin head having slice lines varied with hairstyles allows the student to acquire a cut technique suited for each hairstyle.

In the mannequin head used for hairdressing training according to the present invention, said line may include an upper zone line and a lower zone line for dividing the scalp area in the height direction; a median line for dividing the scalp area in the left and right direction; and/or an ear-to-ear line for dividing the scalp area in the front and back direction.

In the mannequin head used for hairdressing training according to the present invention, wherein said slice line may have markings showing guide of prescribed positions of the scalp area in the length direction of the line.

In this case, the markings are represented by dots, for example. In a case where the zone lines are drawn on the scalp area in addition to the slice lines, the number of lines increases, thereby causing misleading. So, the dots may be drawn in exchange for the lines at positions showing guide positions of the line or positions along the line for segmenting the scalp area in the height direction.

In the mannequin head for hairdressing training according to the present invention, said slice line may comprise a variety of lines such as various color lines and various types of lines, and each of said lines show a guide of each of various types of hairdressing works.

In this case, when a pick up direction of a panel (for example, a front direction from the head, a direction perpendicular to the head) varies with the position of the panel, the lines of every panel may be drawn in different color or type.

A hairdressing training method according to the present invention is a method for hairdressing training using a mannequin head imitating a human head and having hair fixed on a scalp area thereof, wherein said scalp area has lines giving guides of various hairdressing works such as haircut, perm and hair coloring drawn thereon, in which said line includes a slice line drawn along a border of a panel which is a bundle of hair being a unit of the hair bundled by a hairdresser including a student in a prescribed hairdressing work, and the hairdressing training is conducted following to said lines drawn on said scalp area of said head mannequin.

### Effect of the Invention

According to the present invention, a mannequin head used for hairdressing training, capable of teaching fundamental hairdressing techniques properly, can be provided. And, a student can learn proper positions of the slice lines and the zone lines by practicing using the head mannequin having slice lines and zone lines drawn on the scalp area thereof so as to be expected for upgrade in his existing skill in a short time.

### Brief Description of the Drawings

Figs. 1 are drawings showing a mannequin head according to the first embodiment of the present invention; Fig.1(A) is a front drawing; Fig.1(B) is a side drawing showing the scalp area of the mannequin head; Fig.3(C) is plane drawing; and Fig.3(D) is a drawing viewed obliquely from behind.
Figs. 2 are drawings showing woman's hairstyle; Fig. 2 (A) is a drawing showing "very short"; Fig. 2(B) is a drawing showing "one-length"; Fig.2(C) is a drawing showing "same-layer"; and Fig.2(D) is a drawing showing "gradation bob".
Figs. 3 are drawings showing a skin portion of a mannequin head according to the second embodiment of the present invention; Fig.3(A) is a side drawing; Fig.3(B) is a plane drawing; Fig.3(C) is a drawing viewed obliquely from upper; and Fig.3(D) is a drawing viewed obliquely from behind.
Figs. 4 are drawings showing the cutting way using the mannequin head of Fig.3.
Figs. 5 are drawings showing a skin portion of a mannequin head according to the third embodiment of the present invention; Fig.5(A) is a side drawing; Fig.5 (B) is a plane drawing; Fig.5(C) is a drawing viewed obliquely from upper; and Fig.5(D) is a drawing viewed obliquely from behind.
Fig.6 is a drawing showing one process of cutting processes using the mannequin head.
Figs. 7 are drawings showing a skin portion of a mannequin head according to the forth embodiment of the present invention; Fig.7(A) is a side drawing; Fig.7(B) is a plane drawing; Fig.7(C) is a drawing viewed obliquely from upper; and Fig.7(D) is a drawing viewed obliquely from behind.
Figs. 8 are drawings showing a skin portion of a mannequin head according to the fifth embodiment of the present invention; Fig.8(A) is a side drawing; Fig.8(B) is a plane drawing; Fig.8 (C) is a drawing viewed obliquely from upper; and Fig.6(D) is a drawing viewed obliquely from behind.
Figs. 9 are drawings, showing a way for picking up the hair in a panel from the head.

### Preferred Embodiment of the Invention

Hereinafter, preferred embodiments of the present invention will be described with reference to the accompanying drawings.

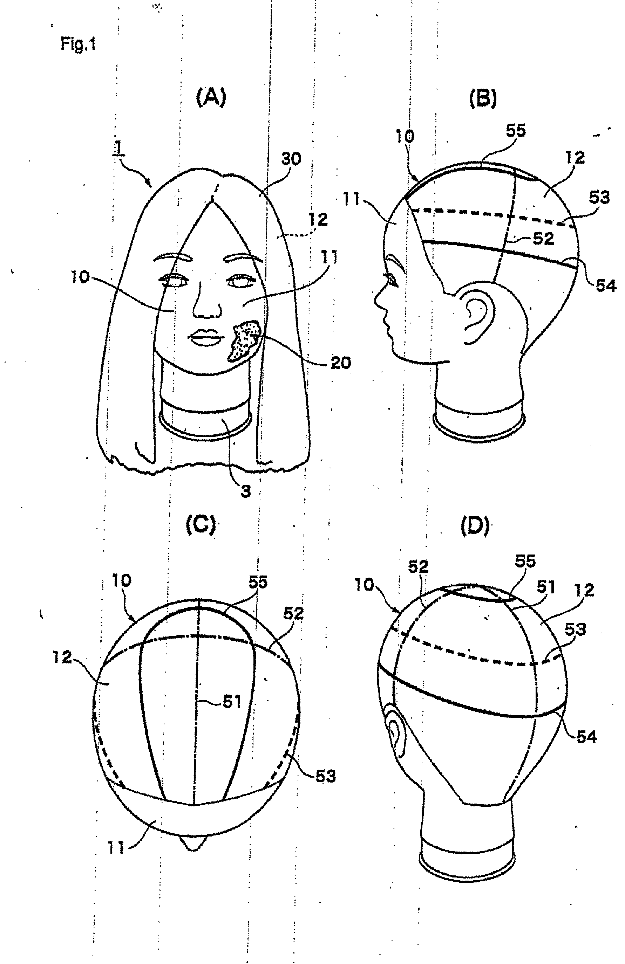

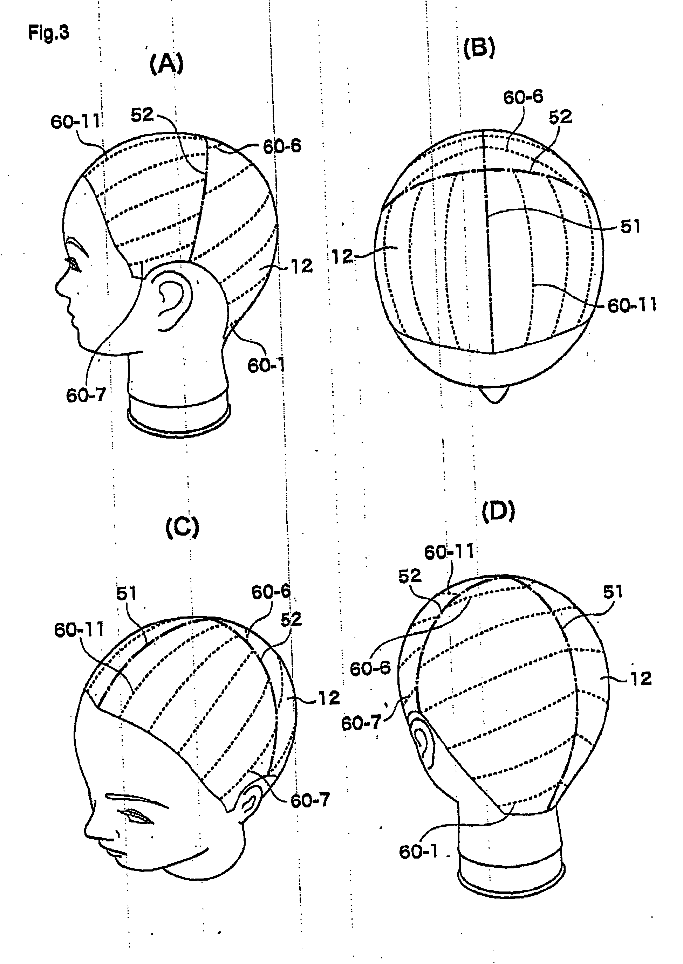

Figs. 1 are drawings showing a mannequin head according to the first embodiment of the present invention: Fig.1(A) is a front drawing; Fig.1(B) is a side drawing showing the scalp area of the mannequin head; Fig.3(C) is plane drawing: and Fig.3(D) is a drawing viewed obliquely from behind.

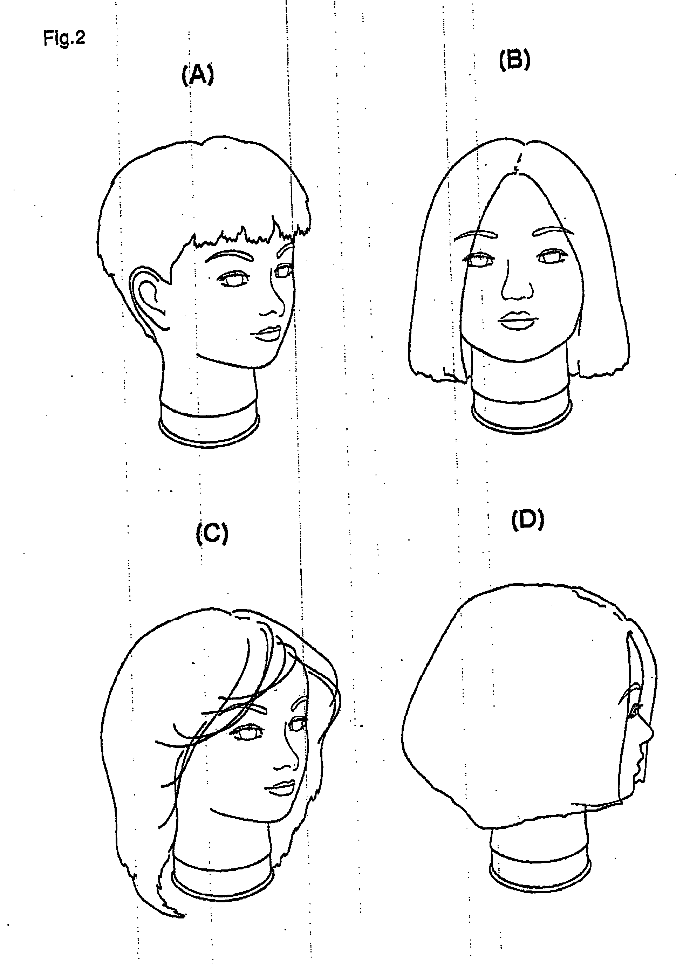

Figs. 2 are drawings showing woman's hair style; Fig.2(A) is a drawing showing "very short"; Fig.2(B) is a drawing showing "one-length': Fig.2(C) is a drawing showing "same-layer": and Fig.2(D) is a drawing showing "gradation bob".

The mannequin head 1, imitating a woman' s head and neck, as shown in Fig.1, is set on a base 3. The mannequin head 1 comprises a hollow: skin portion 10 and a form 20, made of formed plastic, filled in the skin portion 10,(Fig.1 is a partial cutaway drawing showing the skin portion 10). The skin portion 10 is made of plastic, such as vinyl chloride, or rubber having a thickness of 2 to 5mm. The skin portion 10 has a face area 11 on which eyebrows, eyes, a nose, mouse and ears are formed and a scalp area 12 on which human or artificial hair 30 is fixed. The hair 30 is about 30cm in length at the crown portion and about 15cm in length in the nape portion.

A plural of lines giving guide of hairdressing works are drawn on the scalp area 12 of the skin portion 10. The lines may be drawn by hand with a magic marker or a playback robot which follows the lines when the mannequin head is mass-product. In this embodiment, the following lines are drawn.
a) A line (a median line) 51 extending backward from a center of the forehead through the crown (represented by a dashed line in Figs. 1(C) and 1(D)).
b) A line (an ear-to-ear line) 52 extending between the ears horizontally viewed from the top of the head (represented by a dashed line in Figs. 1(B), 1(C) and 1(D)).
c) Zone lines 55, 53 and 54 transversely extending for dividing the scalp area 12 into an upper area, a middle upper area, a middle lower area and a lower area (represented by a solid line, a dashed line and a solid line, respectively, in Figs. 1(A) to 1(D)). The zone line is also called as a section line and may have one, two or four or more lines depending on the hairstyle.

The median line 51 is perpendicular to the ear-to-ear line 52 at the crown as shown in Fig. 1(C). The median line 51 shows a guide for dividing the scalp area 12 into the right area and the left area. The ear-to-ear line 52 shows a guide for dividing the scalp area 12 into the front area and the back area.

The zone lines include three lines 53,54 and 55 (a middle zone line, a lower zone line and an upper zone line, respectively). The middle and lower zone lines 53 and 54, represented by a solid line and a dashed line in Figs.1(B), 1(C) and 1(D) respectively, are drawn extending transversely between the upper and lower positions of both sides of the forehead through the upper and lower positions of the most protruded position of the back of the head, respectively. And, the upper zone line 55, represented by a solid line in Fig.1(C), is drawn extending transversely between the outside positions of the center of the forehead so as to surround the intersection of the median line 51 and the ear-to-ear line 52. The zone lines show guide for dividing the scalp area 12 into the upper area, the middle upper area, the middle lower area and the lower area in the height direction. For example, the hair in an area under the lower zone line 53 (the lower area) hangs downward and does not appear on the surface of the hair. The hair in an area above the upper zone line 55 (the upper area) hangs along the counter of the head and then along the surface of the hair in the area under the lower zone line 54, :and appears on the surface of the hair to be shaped. The hair in an area between the upper and lower zone lines 55 and 54 gives a balance between the hair length in the upper area and the hair length in the lower area.

The zone lines 51 to 55 for dividing the scalp area 12 shows guides whether or not the length of the hair has a left and right symmetry, or, has a balance and the like. Although how to use the zone lines and the ear-to-ear line vary with the hairstyles, how to use the median line 1 does not vary with the hairstyles.

The lines provided on the mannequin head in this embodiment are used as standard lines that will be basis of all hairstyles in training hair cutting. An application example using the mannequin head for training of making a "very short" will be explained briefly.

First, a comb is placed on the median line 51 for dividing the hair into a right bundle and a left bundle. And, the comb is placed on the ear-to-ear line 52 for dividing each bundle into a front bundle and a back bundle, respectively, resulting in four blocks (a left side block, a right side block, a left back block and a right back block). Then, the hair in each block is cut while the length of the hair is balanced between each block. And, a bangs is out and then the hair in an area surrounded by the upper zone line 55 is trimmed up so as to make the "very short". In a case where the hair on the sides is layered, the hair on the sides is trimmed up such a way that the hair length increases continuously from top to bottom forward from the ear-to-ear line 52. Then, the hair in each block is trimmed up such that the length of the hair in each block would be balanced.

In a training using the mannequin head, an instructor demonstrates to students the hairdressing techniques using the mannequin head or the student practices using the mannequin head alone. In the demonstrating using the mannequin head, the instructor can demonstrate each line constantly independent of his uniqueness of hairdressing techniques, facilitating the teaching and understanding of the student. And, in the practicing using the mannequin head, the student can acquire the hairstyling techniques by repeat practicing of placing a comb along the lines.

Figs. 3 are drawings showing a skin portion of a mannequin head according to the second embodiment of the present invention; Fig.3(A) is a side drawing; Fig.3(B) is a plane drawing; Fig.3(C) is a drawing viewed obliquely from upper; and Fig.3(D) is a drawing viewed obliquely from behind.

The mannequin head in this embodiment is used in training of a cut: technique for making "one-length". In the "one-length", the hair is hung downward and trimmed up with the same level (the same height). The mannequin head 12 of this embodiment has the following lines drawn thereon.
a) A median line 51.
b) An ear-to-ear line 52.
c) A plurality of slice lines 60-1 to 60-11 (represented by thin dashed lines in Figs.3).

The slice lines 60 are lines drawn along a border of a bundle of hair (a panel), in which the panel is a unit of the hair handled by a hairdresser in a prescribed hairdressing work such as out, perm and coloring.

The slice lines 60 are substantial horizontal and parallel lines represented by thin dashed lines in Figs . 3 and are symmetric with respect to the median line 51 as shown in Figs. 3(D) and 3(D). And, as shown in Figs.3(A) and 3(B), the slice lines drawn on the front area are different in form from the slice lines drawn on the back area.

On the back area, as shown in Figs. 3(A) and 3(D), the slice lines 60-1 to 60-6 are: drawn extending parallel and obliquely downward from the median line 51 to the ear-to-ear line 52 and the hair line. A distance between the slice lines is about 2cm.

On the front area, as shown in Figs. 3(A), 3(B) and 3(C), the slice lines 60-7 to 60-11 are drawn extending from the ear-to-ear line 52 to the hair line substantial parallel to the median line 51. A distance between the slice lines is about 2cm. As shown in Fig. 3(A), the slice lines 60-1 to 60-6 drawn on the back area are not continuous with the slice lines 60-7 to 60-11 drawn on the front area at the ear-to-ear line 52. In this hairstyle, since the front area defines important blocks for shaping a symmetric style in the right to left direction, the standard slice is set on the front face so as to form a parallel bob line.

The substantial transverse slice lines 60 are suited for making a hairstyle in which the hair is hung downward and trimmed up at the same level, such as the "one-length" and the "bob".

And, the slice lines 60 are drawn with a color different from the color of the median line 51 and the ear-to-ear line 52.

An application example using the mannequin head will be briefly explained.

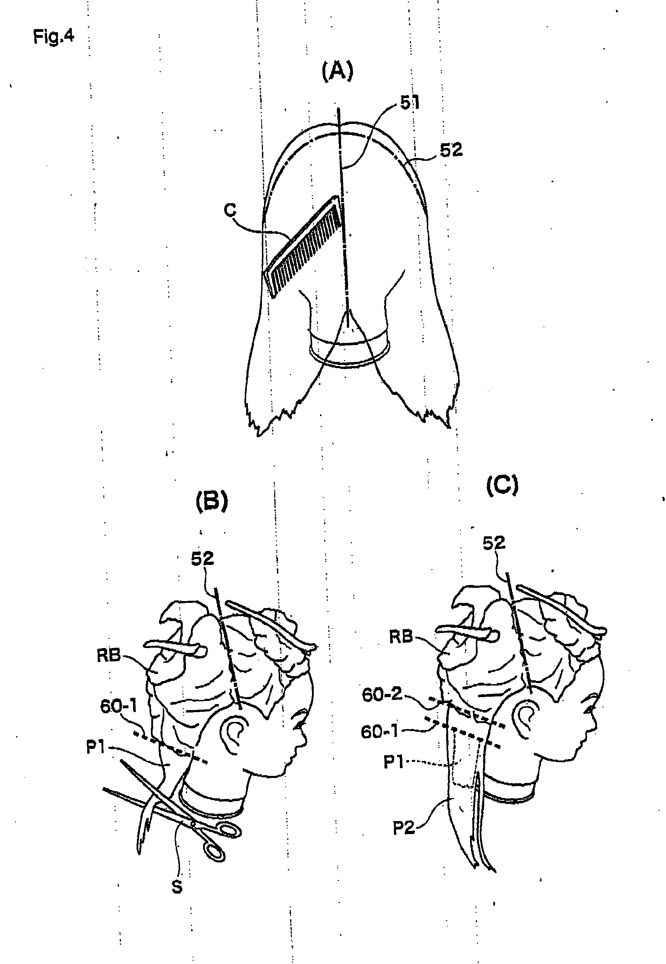

Figs. 4 are drawings showing the cutting way using the mannequin head of Fig.3.

As shown in Fig.4 (A), the hair is divided into the left block and the right block by the comb C placed along the median line 51. And, the left and right blocks are divided into the front block and the rear block, respectively, by the comb C placed along the ear-to-ear line 52, resulting in four block (the left and right side blocks and the left and right back blocks). Then, as shown in Fig.4(B), in the right back block RB, the comb C is placed along the lowermost slice line 60-1 and the hair in an area under the lowermost slice line 60-1 is bundled together to form a bundle of hair (a panel) P1. And, the hair in the panel P1 is divided into plural (1 to 3) segments. Then, the hair in each segment is clipped with an index ginger and a middle finger of one hand and out at a suitable length with a scissor by the other hand. Next, as shown in Fig. 4 (C), the comb C is placed along the second slice line 60-2 and the hair in an area between the slice lines 60-1 and 60-2 is bundled together to form a bundle of hair (a panel) P2. Then, the hair in the panel P2 is divided into plural segments and the hair in each segment is clipped with one hand and cut so as to have the same length as that of the hair in the panel P1. Then, last of all, the hair in an area between the uppermost slice line and the ear-to-ear line 52 is cut in the same manner.

In the left back block, the hair is out in the same manner as the right back block. In which case, the hair on the slice lines on the same level in the right back block and the left back block are cut so as to have the same length.

After cutting the hair in the left and right back blocks, in the left and right side blocks, the comb C is placed along the lowermost slice line and the hair in an area under the lowermost slice line 60-1 is bundled together to form a panel P1 in the same manner as the left and right back blocks. And, the hair in the panel P1 is cut in the same manner. Next, the comb C is placed along the second slice line and the hair in an area between the lowermost and second slice lines is bundled together to form a panel. Then, the hair is out so as to have the same length as that of the hair in the former panel. Then, last of all, the hair in an area between the uppermost slice line and the median line 51 is out in the same manner. In the left back block, the hair is out in the same manner as the right back block. In which case, the hairs on the slice lines on the same level in the right side block and the left back block are cut so as to have the same length.

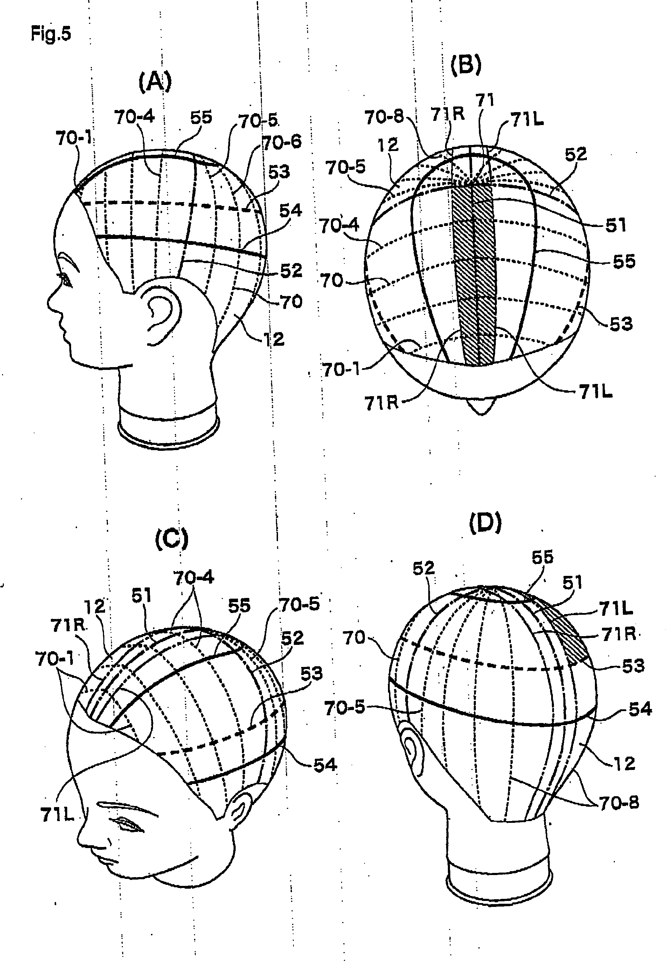

Figs. 5 are drawings showing a skin portion of a mannequin head according to the third embodiment of the present invention; Fig.5(A) is a side drawing; Fig.5(B) is a plane drawing; Fig.5(C) is a drawing viewed obliquely from upper; and Fig.5(D) is a drawing viewed obliquely from behind.

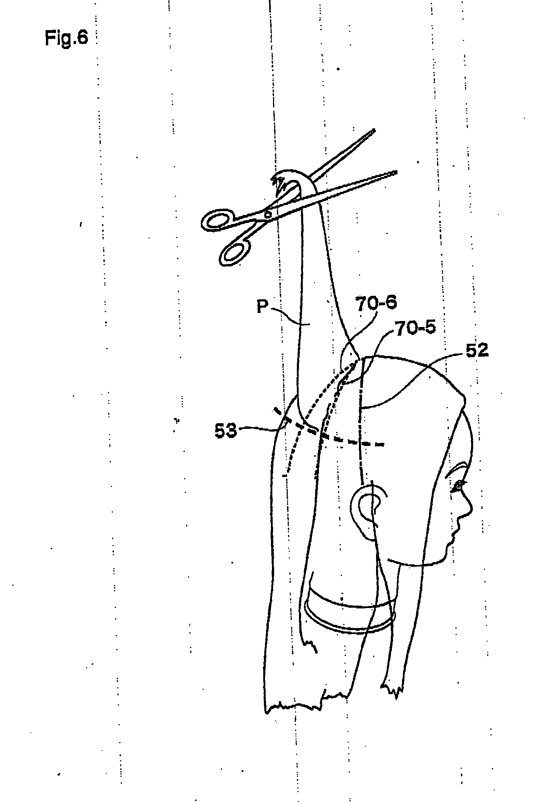

Fig. 6 is a drawing showing one process of cutting processes using the mannequin head.

The mannequin head in this embodiment is used for training of a cut technique for making "same-layer". In the "same-layer", as shown in Fig.2(C), the hair in the whole is trimmed up at the same length so as to have an outline along the shape of the head. The mannequin head of this embodiment has the following lines drawn thereon.
a) A median line 51.
b) An ear-to-ear line 52.
c) An upper, middle and lower zone lines 55,53 and 54 (the middle zone line 53 is also called as a two-section line).
d) A plural of slice lines 70-1 to 70-8.
e) Start lines 71R and 71L.

The slice lines 70 are substantial parallel lines extending substantial vertically and symmetric with respect to the median line 51, as shown in Fig. 5(A). On the front area, as shown in Figs. 5(A), 5(B) and 5(C), the slice lines 70-1 to 70-4 are drawn extending downward parallel to the ear-to-ear line 52 from the median line 51 to the hair line at about 90°. A distance between the slice lines 70-1 to 70-4 is about 2cm. On the back area, as shown in Figs.5(B) and 5(D), the slice lines 70-1 to 70-8 are drawn extending radially from the intersection of the median line 51 and the ear-to-ear line 52 to the hair line.

The vertical slice lines 70 allow making a wide gradated hairstyle rather than the horizontal slice lines 60 and are suited for making the outline of the hair round and gradating the outline.

The start lines 71R and 71L are drawn extending parallel to the median line 51 at the both sides of the median line 51, as shown in Figs. 5(B), 5(C) and 5(D), and are used as bellow. The cutting is started from the hair in an area between the start lines 71R and 71L (a mohican guide).

An application example using the mannequin head will be briefly explained.

After trimming up the whole hair along the outline, the hair in the front mohican guide, which is divided by the ear-to-ear line 52, is out to have a predetermined length. Then, in the right side block, hair in a panel between the ear-to-ear line 52 and the adjacent slice line 70-4 (shown in Fig.5 (E)) former than the ear-to ear line 52 is picked up by one hand and cut to the same level as the hair in the front mohican guide. Thereafter, a panel between the adjacent slice lines is cut in the same manner. And, in the left side block, the same cutting work is carried out.

Thereafter, the hair in the back mohican guide, which is divided by the ear-to-ear line, 52, is cut at the predetermined length. And, in the right back block, the hair in a triangle panel (represented by hatching in Fig.5(D)) surrounded by the state line 71L, the slice line 70-8 and the two-section line 53 is picked up and out at the same level as the hair in the back mohican guide. Then, the hair in the next triangle panel surrounded by the adjacent slice lines and the two-section line 53 is cut in the same manner until a triangle panel surrounded by the ear-to-ear line 52, the adjacent slice line and the two-section line 53. Fig.6 shows a state in which the hair in a triangle panel P surrounded by the adjacent slice lines 70-6 and 70-5 and the two-section line 53 is cut. Thereafter, the same cutting is carried out in the left side block.

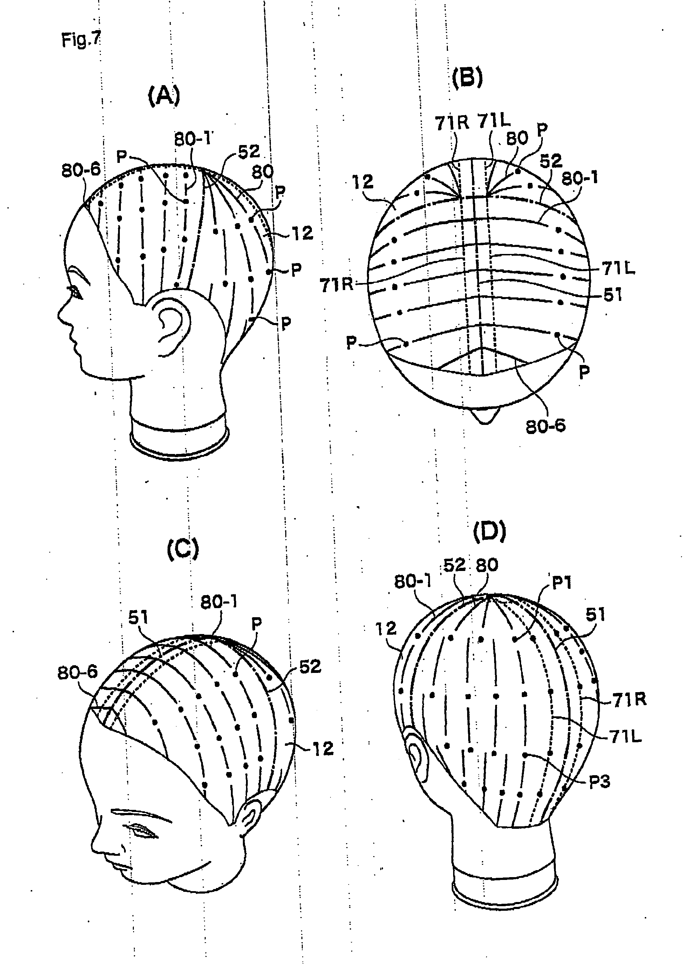

Figs. 7 are drawings showing a skin portion of a mannequin head according to the forth embodiment of the present invention; Fig.7(A) is a side drawing; Fig.7(B) is a plane drawing; Fig.7(C) is a drawing viewed obliquely from upper; and Fig.7(D) is a drawing viewed obliquely from behind.

The mannequin head in this embodiment is a modified mannequin head of Fig.5. The mannequin head of this embodiment has the following lines and dots drawn thereon.
a) A median line 51.
b) An ear-to-ear line 52.
c) A plural of slice lines 80.
e) Start lines 71R and 71L.
f) A plural of dots P.

In this embodiment, the zone lines are not drawn unlike with the embodiment in Fig.5; a plural of dots P are drawn along the middle of the slice lines for showing guide positions of the lines in the length direction. On the front area, as shown in Figs.7(A) and 7(C), the dots P are positioned such that the front area is divided into four segments in the height direction, And, as shown in Figs.7(A), 7(B) and 7(C), the slice lines 80-1 to 80-6 are drawn extending from the median line 51 to the hair line perpendicular to the median line 51 so as to join the dots P in the longitudinal direction.

On the back area, as shown in Figs. 7 (A) and 7(D), the dots P are positioned such that the back area is divided into five segments in the height direction. And, the slice lines 80 are drawn extending radially from the intersection of the median line 51 and the ear-to-ear line 52 to the hair line. However, the slice lines 80 not have to be continued in the height direction at the dots P the distance between the slice lines in the transverse direction varies correspondent to a region of the head. For example, as shown in Fig.7(D), the distance between the slice lines in the transverse direction at a region between the uppermost dot P1 and the third dot P3 is relatively wide; the distance between the slice lines in the transverse direction at a region under the third dot P3 is relatively narrow.

In a case where the zone lines (section lines) are drawn in addition to the slice lines, the number of lines increases, thereby causing misleading the hairdressing work. Accordingly, the dots may be drawn at guide positions of the line in the length direction in exchange for lines.

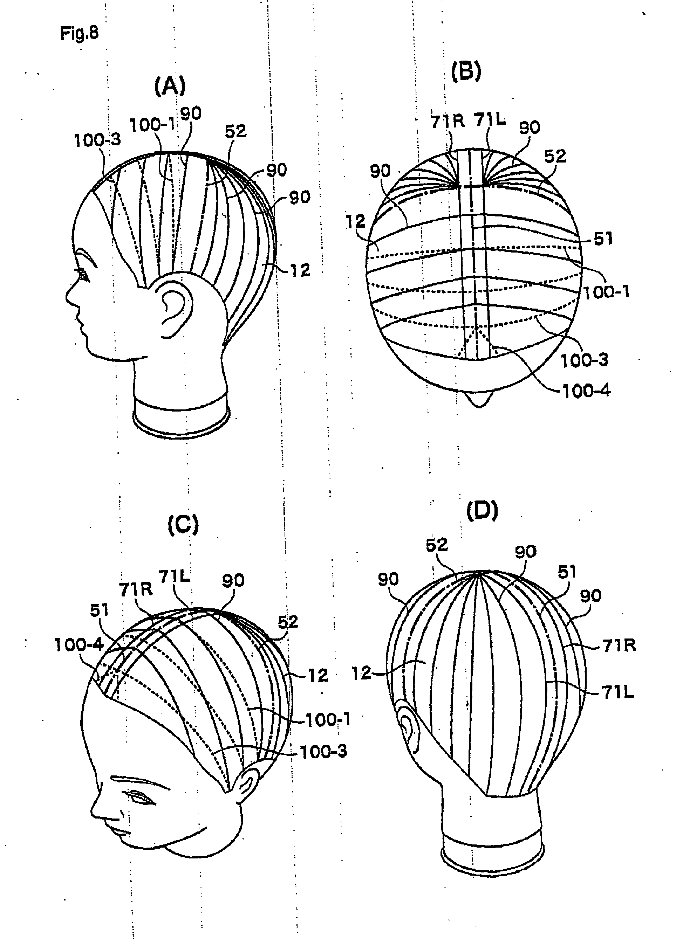

Figs. 8 are drawings showing a skin portion of a mannequin head according to the fifth embodiment of the present invention; Fig. 8 (A) is a side drawing; Fig. 8 (B) is a plane drawing; Fig. 8 (C) is a drawing viewed obliquely from upper; and Fig.8(D) is a drawing viewed obliquely from behind.

The mannequin head in this embodiment is used for training of a cut technique for making "layer". In the "layer", the hair is trimmed up such that the hair length increases continuously from top to bottom. The head mannequin of this embodiment has the following lines drawn thereon.
a) A median line 51.
b) An ear-to-ear line 52.
c) A plural of first slice lines 90.
e) A plural of second slice lines.100.
f) Start lines 71R and 71L.

In this embodiment, the second slice lines 100-1 to 100-4 are drawn on the front area in addition to the same first slice lines 90 as that of Fig.5. On the front area, the first slice lines 90 are drawn extending parallel to the ear-to-eat line 52; the second slice lines 100 are drawn extending from the median line 51 to the hair line substantially perpendicular to the median line 51 as shown in Figs. 8(B) and 8(C), Note that the forefront second slice lines 100-4 are drawn extending forward from the median line 51 to the hair line at an angle of about 45°. The first and second slice lines 90 and 100 differ in color. In this embodiment, the first slice lines 90 are drawn with black (represented by a solid line in Figs. 8) and the second slice lines 100 are drawn with red (represented by dashed line in Figs. 8). A way for picking up the hair in the panel between the first slice lines is different from that between the second slice lines.

The first and second slice lines may differ in line type.

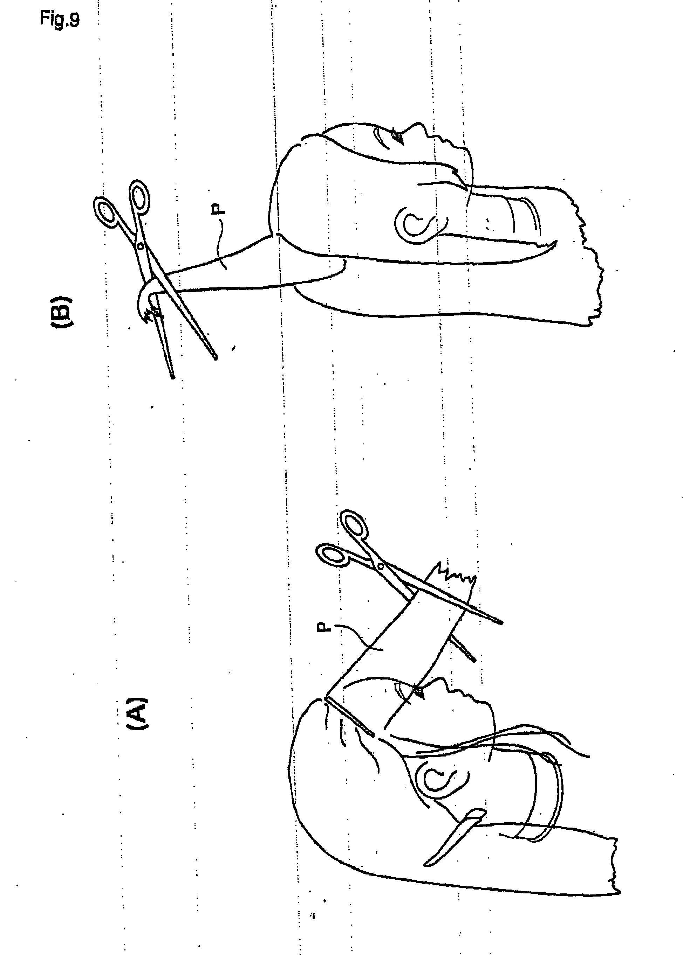

Figs. 9 are drawings showing a way for picking up the hair in a panel from the head.

When the hair in a panel P between the seconds slice lines 100 is picked up, as shown in Fig. 9(A), the panel is picked up in the direction substantial perpendicular to the head.

When a panel P between the first slice lines 90 is picked up, as shown in Fig. 9(B), the panel P is picked up downward from the head.

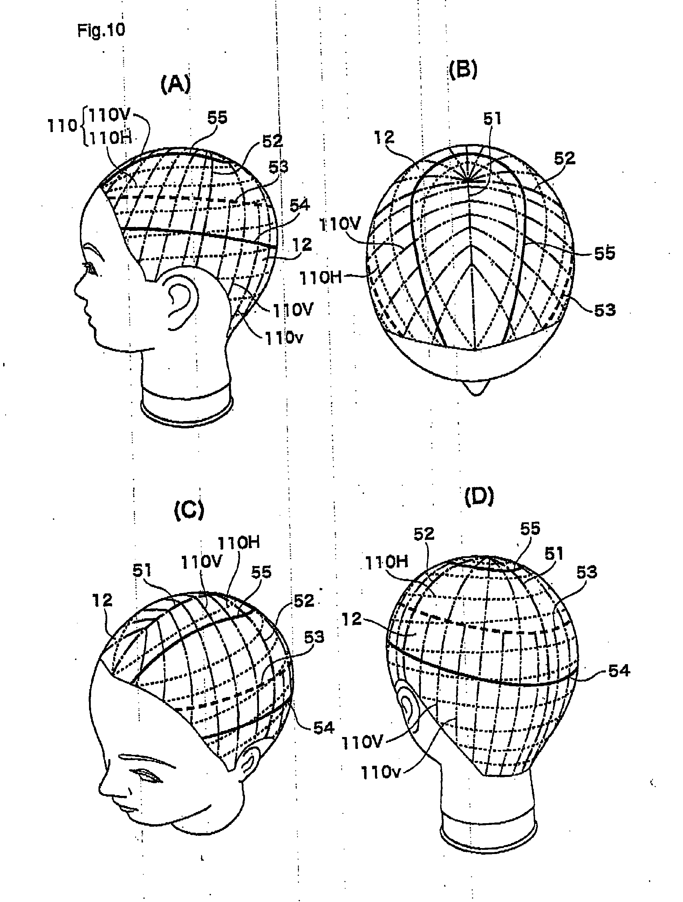

Figs. 10 are drawings showing a skin portion of a mannequin head according to the sixth embodiment of the present invention; Fig.10(A) is a side drawing; Fig.10(B) is a plane drawing: Fig. 10(C) is a drawing viewed obliquely from upper; and Fig.10(D) is a drawing viewed obliquely from behind.

The mannequin head in this embodiment is used for training of a out technique for making "gradation bob". In the "gradation bob", as shown in Fig. 2(D), the hair shaped in the "one-length" is trimmed up so as to be gradated. The mannequin head of this embodiment has the following lines drawn thereon.
a) A median line 51.
b) An ear-to-ear line 52.
c) An upper, middle and lower zone lines 55, 53 and 54.
e) A plural of slice lines 110H, 110V and 110v.

The slice line 110 comprises a plural of transverse and parallel lines 110H and a plural of longitudinal parallel lines 110V, as shown in the figures. The slice lines are symmetric with respect to the median line 51.

The transverse slice lines 110H are drawn extending as with the slice lines 60 of Fig. 3 covering the head. Note that the transverse slice lines 110H in this embodiment extend relatively horizontal rather than the slice lines 60 of Fig. 3. A distance between the transverse slice lines 110H is about 2cm.

The longitudinal slice line 110 V, as with the slice lines 70 of Fig. 5, comprises parallel lines extending parallel to the ear-to-ear line 52 in the front area, and radial lines extending radially from the intersection of the median line 51 and the ear-to-ear line 52 to the hair line in the back area.

However, in this embodiment, in the front area, as shown in Figs 10(B) and 10(C), the lines are closely spaced rather than the lines of Fig. 5 and extends not parallel to the ear-to-ear line 52 but obliquely forward to the hair line. In addition, as shown in Fig. 10(D), in the back area, another longitudinal slice lines 110v are drawn extending parallel to the median line 51 from the middle zone line 53 to the hair line between the longitudinal slice lines 110V.

Such slice lines 110 divide the front area and an area under the middle zone line 53 in the back area into relatively small grids having relatively small area and also divide another area into relatively large grids having relatively large area.

An application example of the mannequin head in this embodiment will be explained briefly.

First, as with the:embodiment in Fig. 3. the hair is trimmed up into the "bob", in which the level of the hair is inclined upward at 15°, using the transverse slice lines 110H. And, the hair is divided into the upper and lower sections at the most protruded position of the back of the head (the center of the middle and lower zone lines 53 and 54). Then, in the lower section, the hair in a panel between the median line 51 and the adjacent longitudinal slice line 110 is out at the predetermined length. Thereafter, the next former panel is cut in the same manner.

Then, in the upper section, the hair in a panel between the median line 51 and the adjacent longitudinal slice line 110 is cut at a predetermined length. Thereafter, the next former panel is cut in the same manner.

## Claims

1. A mannequin head used for hair dressing training, the mannequin head imitating a human head and having hair fixed on a scalp area thereof,
wherein said scalp area has lines giving guides of various hairdressing works such as haircut, perm and hair coloring drawn thereon, and
said lines includes a slice line drawn along a border of a panel which is a bundle of hair being a unit of the hair bundled by a hairdresser including a student in a prescribed hairdressing work.

2. The mannequin head used for hairdressing training according to claim 1,
wherein said lines include a plurality of slice lines, in which a distance between the adjacent slice lines is equal to a width of said panel.

3. The mannequin head used for hairdressing training according to claim 1 or 2,
wherein said line includes an upper zone line and a lower zone line for dividing the scalp area in the height direction; a median line for dividing the scalp area in the left and right direction; and/or an ear-to-ear line for dividing the scalp area in the front and back direction.

4. The mannequin head used for hairdressing training according to any one of claims to 3,
wherein said slice line has markings showing guide of prescribed positions of the scalp area in the length direction of the line.

5. The mannequin head used for hairdressing training according to any one of claims 1 to 4,
wherein said splice line comprises a variety of lines such as various color lines and various types of lines, and
each of said lines show a guide of each of various types of hairdressing works.

6. A hairdressing training method using a mannequin head, the mannequin head imitating a human head and having hair fixed on a scalp area thereof,
wherein said scalp area has lines giving guides of various hairdressing works such as haircut, perm and hair coloring drawn thereon, in which said lines includes a slice line drawn along a border of a panel which is a bundle of hair being a unit of the hair bundled by a hairdresser including a student in a prescribed hairdressing work, and
the hairdressing training is conducted following to said lines drawn on said scalp area of said head mannequin.

7. A mannequin head for use when training a hairdresser, the mannequin head comprising a scalp section to which hair may be attached, wherein the scalp section includes one or more guide lines, the one or more guide lines including a slice line which defines at least part of a border of a part of the scalp section such that the hairdresser may use the slice line as a guide during training.
